# EUROPEAN PATENT SPECIFICATION

(11) **EP 0 915 050 B1**
(45) Date of publication and mention of the grant of the patent: **04.09.2002**
(21) Application number: 98120489.4
(22) Date of filing: 29.10.1998
(51) Int. Cl.: B65H 23/02, G01D 15/28

(54) **A web having alignment indicia and an associated web feeding and working apparatus**
Bahn mit Führungsmarkierungen und Vorrichtung zum Führen der Bahn
Bande de matériau avec des marques de guidage et dispositif pour guider la bande

(30) Priority: 03.11.1997 US 962758
(43) Date of publication of application: 12.05.1999
(60) Divisional application: 02002376.8
(73) Proprietor: Gerber Scientific Products, Inc., Manchester, CT 06040 (US)
(72) Inventor: Hevenor, Charles M., Glastonbury, CT 06033 (US); Gordon, Thomas A., South Glastonbury, CT 06073 (US)
(74) Representative: Schaumburg, Thoenes & Thurn

(56) References cited:
- WO-A-89/10888
- CH-A- 200 635
- DE-A- 2 040 615
- DE-A- 3 222 629
- DE-C- 898 003
- DE-U- 29 515 614

## Description

### BACKGROUND OF THE INVENTION

The present invention relates to a sheet material web and an associated web feeding and handling apparatus which feeds the web in a feed direction longitudinally of itself and performs a work operation on the web. The invention deals more particularly with such an apparatus having a friction drive for feeding the web through the apparatus, and alignment indicia on the web which the apparatus reads as the web is fed to maintain the web in proper alignment with respect to the feed direction.

The present invention may be used with various types of apparatus for performing a work operation on a web of sheet material such as a plotter, a recorder, or a signmaking apparatus. However, for the purposes of clarity and simplicity, the invention will be disclosed in connection with the description of a signmaking apparatus.

Typically, information describing a desired sign graphic, such as an alphanumeric inscription or a geometric shape, is programmed into the signmaking apparatus to cause it to automatically cut the graphic from a continuous length of signmaking web stock. The web stock is stored as a roll and is drawn by a pair of feed sprockets having pins which cooperate with rows of holes punched or otherwise formed in two side edge portions of the web. The sprocket drive not only serves to feed the web through the signmaking apparatus, but also provides a means for maintaining the web in proper alignment with respect to the feed direction as the web is fed and worked on by the apparatus. That is, the sprocket drive prevents skewing of the web to either the right or left of the feed direction as the web is fed through the device.

The signmaking apparatus described above, as well as other web working apparatus, may handle a variety of types of webs and may operate with various types of instruments. For example, the signmaking apparatus is often used to plot a sign pattern on a paper web before the relatively expensive signmaking stock is cut. This being the case, it would be advantageous to have a web and an associated web handling apparatus that did not require a sprocket drive and a corresponding pattern of sprocket holes punched in the web for feeding the web and maintaining it in alignment during the work operation. Elimination of the sprocket drive and the hole pattern in the web would not only reduce the cost of both the apparatus and the web, but also would allow for a simple and rapid interchange of the various types of webs used with the apparatus.

One known alternative to a sprocket drive is a drive whereby a sheet of work material is fed through a nip formed by at least two roller elements, one of which is driven. The pressure exerted on the work material by the roller elements, acts to pull the work material through the nip. Drives of this type are referred to by those skilled in the art as, friction drives.

In order for a piece of sheet material to be fed through a friction drive and maintain its alignment, the pressure exerted by the rolling elements on the sheet material must be the same along the width of the sheet material. This has proven to be difficult because slight variations in the diameter of the rolling elements results in pressure differentials sufficient to cause the work material to become skewed relative to the direction in which it is being fed. In addition, the rolling elements in a friction drive have the tendency to skid on the work material, thereby further exacerbating the difficulties described above.

Historically, the mechanism by which manufacturers of friction drives have attempted to overcome the deleterious effects of material misalignment has been the grit wheel. Grit wheels generally take the form of cylinders sequentially spaced along the length of a roller. Each grit wheel has an anti-skid treatment on its outer periphery. In order to ensure that the work material feeds through the apparatus without becoming skewed, the outer diameters of all of the grit wheels used on a particular roller must be identical, as such they can become quite expensive. Moreover, since the grit wheels are manufactured as matched sets, if one grit wheel wears faster than another, all of them must be reworked or replaced.

In addition to the foregoing, it should also be appreciated that as the cutter or plotting pen of the signmaker works on the web, it can create a drag in the center portion or work area of the web. Therefore, the web tends to bow in the lateral direction as it is fed through the apparatus and the work operation is performed. Even a sprocket drive which effectively maintains the web in alignment with the feed direction, does little to correct the lateral bowing of the web that occurs during the work operation.

In DE-U-295 156 14 an apparatus for detecting the position of a web edge is disclosed. This apparatus cooperates with a web on which indicia extending parallel to the web edge are formed. By means of these indicia it can be determined on which positional criterion the detection is based.

In CH-A-200 635 an apparatus for introducing a web into a machine, e.g. a textile machine, is disclosed. This apparatus includes two friction surfaces contacting the web towards the outer edges thereof. With this arrangement, the adjustability of the web introduced into the machine is limited. It is therefore an object of the present invention to provide a sheet material web and an associated web handling apparatus which do not utilize a sprocket drive and a corresponding pattern of sprocket holes formed in the web to feed the web through the apparatus and maintain proper web alignment.

It is a further object of the present invention to provide such a web and associated handling device, wherein lateral bowing of the web during the work operation is either compensated for or eliminated.

It is still another object of the present invention to provide a web handling device which can actively compensate for web misalignment.

### SUMMARY OF THE INVENTION

The present invention meets these and other objects by providing, in one aspect, a web for use with a web feeding and handling apparatus which utilizes a friction drive for feeding the web back and forth along a feed path through the apparatus. The web comprises an elongated worksheet having a work surface, an opposite surface and two parallel edge portions, all of which extend along the length of the worksheet. The worksheet also has a work area for working by a tool supported on the web handling apparatus. The work area is located between the two parallel edge portions and extends along the length of the worksheet. Lateral alignment indicia are located on the opposite surface of the worksheet along its length and are positioned within at least one of the parallel edge portions. The lateral alignment indicia are readable by sensors mounted on the web handling apparatus to determine the lateral alignment of the web with respect to the feed direction as the web is fed into and then through the apparatus.

The previously described web also includes longitudinal alignment indicia located along the length of the worksheet and within the work area on either the work surface or the opposite surface of the worksheet. The longitudinal alignment indicia are readable by the aforementioned reading means to determine the longitudinal alignment of corresponding transverse positions across the work area and the lateral edge portions of the web, as the web is fed through the web handling apparatus and the work operation is performed.

According to another aspect of the present invention, a web feeding and handling apparatus is provided for feeding an elongated web along a feed path longitudinally of itself and for performing a work operation on the web. The apparatus comprises a friction drive for frictionally engaging and feeding the web in the feed direction, a tool engageable with the web and moveable relative thereto for performing work operations on the web, and a controller for issuing commands to the friction drive and the tool to move the web and the tool relative to one another during a work operation according to data defining a particular work operation to be performed on the web. In addition, the apparatus includes a means for reading the lateral alignment indicia on the web and generating output signals indicative of the web's alignment with respect to the feed direction. The controller receives the generated output signals and issues commands in response thereto to operate the friction drive so that the web is brought into proper alignment with the feed direction.

In the case where the web carries longitudinal alignment indicia, the sensor also reads these indicia and generates additional output signals indicative of the longitudinal alignment of corresponding transverse positions across the work area and the lateral edge portions of the web. Based on these output signals, the controller operates the friction drive to maintain the longitudinal alignment of these corresponding transverse positions or otherwise controls the work operation to account for any misalignment of these positions as the web is fed through the apparatus and the work operation is performed.

In one embodiment of the present invention, the friction drive includes a roller having a contoured end portion and a plurality of pinch wheels spaced transversely across the web. The roller and pinch wheels cooperate to define a plurality of nips for receiving and feeding the web in the feed direction. The position of at least one of the pinch wheels is moveable along the contoured portion of the roller for adjusting the alignment of the web with respect to the feed direction.

In another embodiment of the present invention, the roller employed by the friction drive is not contoured and the web feeding and handling apparatus includes a mechanism for displacing an end portion of the roller, relative to the remainder of the roller such that if the worksheet becomes skewed as it is being fed through the apparatus, the mechanism is actuated thereby forcing the worksheet back into alignment. The amount by which the roller is displaced is controlled by a drive, preferably of the piezoelectric type. A piezoelectric drive contains a crystal, or other electrically poled material, such as ferroelectric ceramics. These materials when strained become electrically polarized. Conversely, if an electric field is applied to these materials, they deform in a linear manner. As such a piezoelectric drive is one where an electric field is applied to the piezoelectric material thereby causing a concomitant linear deformation that can be used to move and/or deflect objects, such as the above-described roller.

In yet another embodiment of the present invention, the roller employed by the friction drive consists of a first and a second roller section. The first roller section is rotatably mounted to the frame at a first end. A first end of the second roller section is rotatably mounted to a second end of the first roller section. The second end of the second roller section is also rotatably mounted to the frame. A drive means is associated with the first roller section for driving it at a speed equal to, or different from the predetermined speed of the first roller section. During operation, if the web becomes skewed as it is being fed through the friction drive, the speed of the second roller section can be increased, or decreased to bring the web back into alignment. Once aligned, the speed of the second roller section will be matched to the speed of the first roller section.

### BRIEF DESCRIPTION OF THE DRAWINGS

Fig. 1 is a front perspective of a web and an associated web feeding and handling apparatus embodying the invention.
Fig. 2 is a fragmentary sectional view of the apparatus shown in Fig. 1.
Fig. 3 is a sectional view taken along the line 3-3 in Fig. 2.
Figs. 4a, 4b and 4c show alternative embodiments of the drive roller which forms a part of the apparatus shown in Fig. 1.
Figs. 5a, 5b, 5c and 5d show alternative embodiments of the web shown in Fig. 1.
Fig. 6 is a fragmentary sectional view of an alternate embodiment of the apparatus of Fig. 1.
Fig 7 shows an alternate embodiment of the drive roller employing a pair of low friction sleeves.
Fig. 8 shows an alternate embodiment of the drive roller.
Fig. 9 shows an alternate embodiment of the apparatus of the present invention.
Fig. 10 shows an alternate embodiment of the apparatus of the present invention.
Fig. 11 is a sectional view of the apparatus of Fig. 10 taken through line 11-11.
Fig. 12 shows an alternate embodiment of the present invention.
Fig. 13 shows an alternate embodiment of the present invention.

### DETAILED DESCRIPTION OF THE PREFERRED EMBODIMENTS

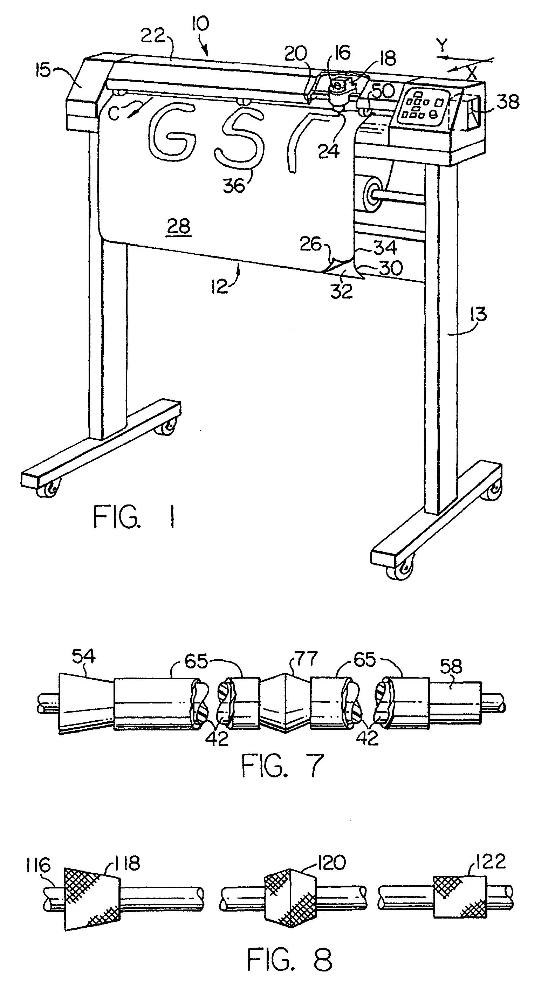

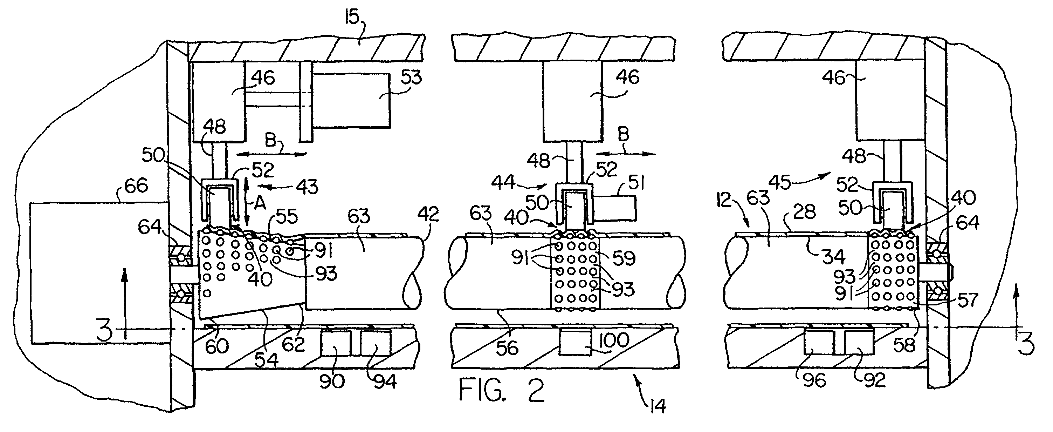

Referring now to Figs. 1 and 2, the apparatus of the present invention is illustrated as embodied within a signmaking apparatus 10. The signmaking apparatus 10 is supported on a moveable base 13 and includes a feed mechanism, generally shown at 14, mounted on the frame 15 of the apparatus for feeding the web 12 in an illustrated X-coordinate direction. The apparatus further includes a tool head 16 supported on a moveable carriage 18 which is suitably driven in an illustrated Y-coordinate direction relative to the web 12 along guide rail 20, also mounted on the frame 15. In Fig. 1, the apparatus 10 is shown with a cover 22 enclosing the tool head, carriage, guide rail and drive mechanism; however, in subsequent figures the cover 22 has been removed for clarity. While the apparatus of the present invention is described herein as being embodied within a signmaker, it is to be understood that the invention is not limited in this regard as it is equally applicable to other devices, such as printers and/or plotters.

In normal operation, the tool head 16 is equipped with a knife-type cutter or blade 24. The web 12 preferably consists of an elongated vinyl worksheet 26 having a work surface 28, the worksheet is supported on an elongated paper carrier 30 having a support surface 32 and an opposite surface 34. Due to the combined motion of the tool head 16 and the web 12, the above-described apparatus is able to cut graphics of virtually any shape from the web 12, such as the illustrated graphic 36. These cut shapes can then be transferred to a sign base to form a finished sign.

The signmaking apparatus 10 is also operable in a plotting mode where instead of the previously described blade 24, a pen, pencil or other plotting tool is placed on the tool head 16 and a paper web is fed into the machine. The plotting mode is most often used to check the accuracy of the information defining the graphic to be produced before the more expensive signmaking stock is cut. A controller 38 is also provided for automatically operating the signmaking apparatus in accordance with stored data corresponding to the performance of the desired work operation. In addition, a sensor (not shown) is provided within the tool head for generating signals receivable by the controller to identify the type of tool that is installed in the tool head.

Turning now to the description of the feed mechanism 14, and referring to Fig. 2, the web 12 is received between a plurality of nips 40 defined by a contoured drive roller 42 and a plurality of pinch wheels 43, 44 and 45, each supported by the frame 15 and spaced transversely across the width of the web 12. Each respective pinch wheel includes a solenoid 46 or other suitable actuator for actuating a plunger 48, having a friction roller 50 mounted at its lower end to a bracket 52. The friction roller 50 is made from a suitable material, such as, but not limited to a low durometer rubber, or other high coefficient of friction material. Additionally, each of the plungers 48 can move in response to commands issued from the controller 38, in a direction generally indicated in Fig. 2 by the arrow "A", between a working position whereby the friction roller engages the work surface 28 of the worksheet 26, and a non-working position where the friction roller 50 is raised off of the work surface. When the pinch wheel is in the above-described working position, the friction roller 50 will be in rolling contact with the work surface 28, thereby urging the opposite surface 34 of the carrier sheet 30 against the surface of the drive roller 42, as best seen in Fig. 2.

In addition to moving between the working and non-working positions, pinch wheel 43 can be incrementally translated back and forth in the directions indicated by arrow B across the portion of the width of the web 12, in contact with the contoured surface of the roller 42. This motion can be accomplished by means of a linear drive 53 actuated in response to commands issued from the controller 38. The linear drive 53 can take many forms, such as, for example, a lead screw, a rack and pinion assembly, a motor drivingly connected to the pinch wheel 43 by a belt and pulley system, or a servo-type system, however, the invention is not limited in this regard as other linear drive systems known to those skilled in the art may be substituted without departing from the broader aspects of the present invention. Positioning of the pinch wheel 43 in the direction of arrow B while in the above-described working position will change the orientation of the web 12 with respect to the feed direction indicated generally by the arrow C. The manner in which this is accomplished will be explained in greater detail hereinafter.

Still referring to Figs. 1 and 2, and as mentioned above, the surface of the roller 42 in the preferred embodiment is contoured at one end portion 54. The remainder of the roller 42, that is the central portion 56 and the opposite end portion 58, has a periphery that is substantially uniform in diameter. In the illustrated embodiment, the contoured end portion 54 of the roller is tapered having a diameter which continuously decreases from the roller's outer end 60 to the inner end 62 of the contoured end portion 54. A preferred taper is 0.020 cm per cm (0.020 inch per inch) however, the present invention is not limited in this regard. Depending on the particular position of the pinch wheel 43, the web 12 can be engaged at a point where the peripheral diameter of the contoured end portion 54 is greater than, equal to, or less than the diameter of the roller central and opposite end portion, 56 and 58 respectively. In addition to the foregoing, the roller 42 also includes a plurality of friction surfaces, 55, 57 and 59, best seen in Fig. 2, for gripping the web 12 as it is fed through the apparatus 10. Friction surfaces 55, 57, and 59 are made of a suitable material such as, but not limited to a low durometer rubber. These friction surfaces 55, 57, and 59 define a plurality of substantially parallel peripheral rings of raised portions 91 and corresponding depressed portions 93 such that as the web 12 is fed through the apparatus, the raised portions contact the web 12 at a plurality of discreet points defined by the raised portions 91 thereby increasing the frictional/gripping forces imparted by the contact between surfaces 55, 57, and 59, and the web 12. In addition to increasing the frictional forces, the raised portions 91 create a pattern of indentations in the web which act much like the peripheral sprocket holes found on the edge portions of webs used in sprocket drives. Accordingly as the web is moved back and forth along a feed path through the apparatus, these indentations mate with the raised portions 91, thereby aiding in the maintenance of the web's alignment. In addition, the friction surfaces 55, 57 and 59 can comprise what are referred to by those skilled in the art as grit wheels. Typically, grit wheels consist of cylindrical stainless steel sections having knurled outer peripheries. To further enhance the gripping force between the roller 42 and the web 12, pinch wheels 44 and 45 are respectively positioned over friction surfaces 57 and 59 such that when in their respective working positions, the nips 40 are formed between the pinch wheels 43, 44, and 45 and the friction surfaces.

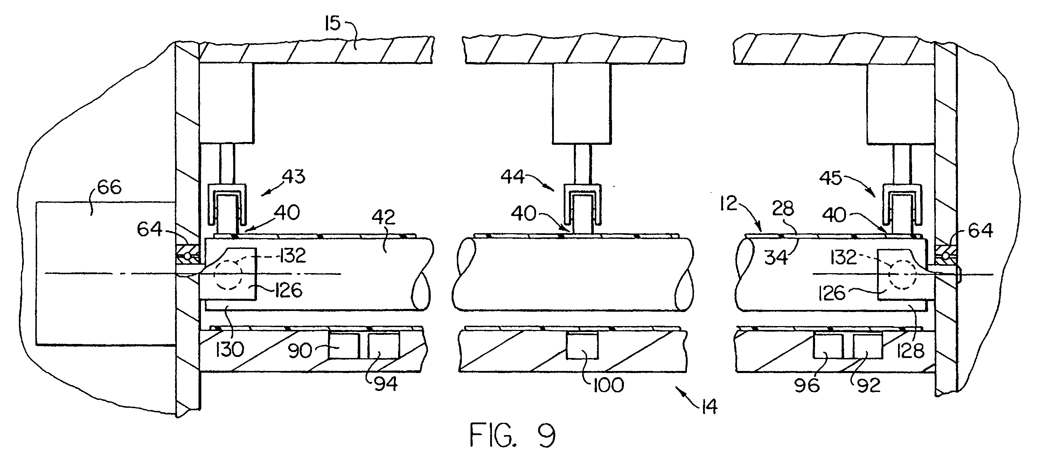

Still referring to Fig. 2, the portions of the roller 42, located between the friction surfaces 55 and 57, and 57 and 59 are coated with, or are comprised of a low friction material 63, such as, but not limited to, PTFE, or a hard plastic. Alternatively, and as shown in Fig. 7, these portions of the roller can be covered by sleeves 65, 65 fabricated from a low friction material, such as, but not limited to, PTFE, or a hard plastic. These low friction surfaces 63 and the sleeves 65 allow for relatively easy alignment of the web 12 by preventing binding between the web and the roller 42 in the areas between the aforementioned friction surfaces.

The roller 42 is rotatably mounted on the frame 15 in bearings 64, 64 and is rotatably driven by a suitable drive means, such as the motor 66. When the roller 42 is driven with the aforementioned pinch wheels in the working position and pinch wheel 43 pressing the web 12 against the contoured end portions 54 at a peripheral diameter greater than the diameter of the remainder of the roller, the web will be skewed to the left with respect to the feed direction. Conversely, if pinch wheel 43 is positioned such that it presses against the web at a location where the peripheral diameter of the contoured end portion is less than the substantially constant diameter of the remainder of the roller 47, the web will be skewed to the right with respect to the feed direction. Moreover, if the pinch wheel presses the web against a position on the contoured end portion 54 where the peripheral diameter is equal to the constant peripheral diameter of the remainder of the roller, then the web's alignment will not change. Thus, adjustments in the alignment of the web can be made by selectively translating the pinch wheel 43 while in its working position to an appropriate transverse position along the contoured end portion 54.

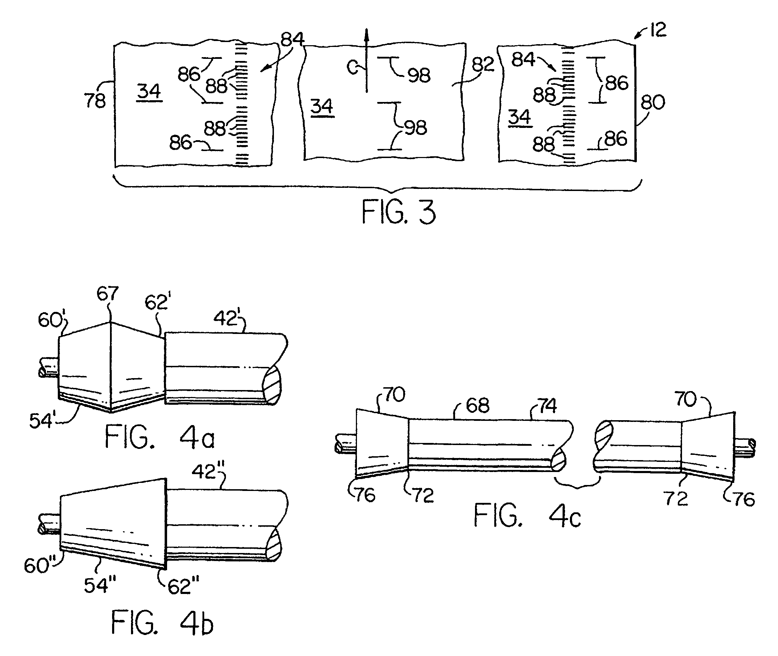

Figs. 4a-4c illustrate examples of other possible contours for the roller 42. In Fig. 4a the peripheral diameter of the contoured end portion 54' of the roller 42' continuously increases from the outer end 60', where the peripheral diameter of the contoured end portion is less than the constant diameter of the central and opposite end portions of the remainder of the roller 42', to a maximum peripheral diameter at 67, where the peripheral diameter of the contoured end portion is greater than the constant peripheral diameter of the remainder of the roller, and then continuously decreases again to the inner end 62' where the diameter is again less than the constant diameter referred to above. This same general contour could also be formed as a continuous curve. Conversely, Fig. 4b illustrates a contour which is opposite to that shown in Fig. 2. The diameter of the contoured end portion 54" of the drive roller 62" is cone-shaped and continuously increases from the outer end 60", where the diameter is less than the constant diameter, to the inner end 62" where the diameter is greater than the constant diameter.

Fig. 4c illustrates a drive roller 68 having two contoured end portions 70, 70. Each of the ends is tapered with a peripheral diameter that continuously increases from an inner end 72, 72, where the diameter equals the constant diameter of the central portion 74 of the drive roller 68, to an outer end 76, 76, where the diameter is greater than the constant diameter. Since, neither end portion has a diameter which is less than the constant diameter of the central portion, this roller requires that both the pinch wheels 43 and 45 be incrementally translatable across the contoured end portion 70, 70 in the direction indicated by arrow B in order to re-align a skewed web 12.

Referring to Figs. 2 and 3, the manner in which the signmaking apparatus 10 operates when the web 12 is initially fed into the apparatus, and the manner in which the web's alignment is maintained during operation will be explained. The web 12 includes two parallel edge portions 78 and 80 which extend along the length of the web, and a work area 82 located between the two parallel edge portions which also extends along the length of the web. A plurality of lateral alignment indicia, generally indicated at 84, are printed along the length of the web on the opposite surface 34 of the carrier sheet and within the parallel edge portions 78 and 80 respectively. In the illustrated embodiment, the lateral alignment indicia includes a series of laterally aligned large hash marks 86, 86, oriented substantially perpendicular to the feed path as indicated by arrow C, and a series of laterally aligned smaller hash marks 88, 88 are disposed between the larger hash marks and also oriented substantially perpendicular to the feed path.

As the web 12 is initially fed into the signmaking apparatus 10, optical sensors 90 and 92 mounted on the frame 15, read the large hash marks 86, 86 in the lateral edge portions 78 and 80 respectively, and optical sensors 94 and 96, also mounted to the frame 15, read the smaller hash marks 88, 88 printed in the edge portions 78 and 80 respectively. When the optical sensors 90 and 92 record the passage of the large hash marks, a signal is sent to the controller 38 where the event is registered. As the web continues to be fed, the sensors 94 and 96 record the passage of the smaller hash marks 88, 88 and similarly forward signals to the controller 38 to register the event.

Since there are a fixed number of smaller hash marks 88, 88 disposed between the larger hash marks 86, 86, in the illustrated embodiment there are ten smaller hash marks printed between two consecutive larger hash marks, the controller 38 simply counts the number of smaller hash marks recorded by the sensors 94 and 96 between the passage of two consecutive larger hash marks as recorded by the sensors 90 and 92. If the controller registers or counts ten smaller hash marks recorded by the sensors 94 and 96 in an equal time period, then the controller determines that the web 12 is laterally aligned with the feed direction. If, however, the sensor 94 requires a longer period of time to record the passage of the ten smaller hash marks than the sensor 96 requires, then the controller determines that the web is skewed to the right with respect to the feed direction. Likewise, the controller determines that the web is skewed to the left with respect to the feed direction if the sensor 94 requires a shorter period of time to record the passage of the ten smaller hash marks than does the sensor 96.

As noted above, the controller 38 is operably connected to the drive 53 which translates the pinch wheel 43 transversely of the web in the direction indicated by arrow B. Accordingly, if the controller determines that the web is skewed to either the right of left, it issues a command signal to the drive 53 to properly position the pinch wheel 43 transversely with respect to the width of the web to adjust the web's lateral alignment. In this manner, the web is brought into proper alignment with respect to the feed direction.

Once the web has been initially aligned with the feed path, it can then be continuously fed through the apparatus 10 to be worked on by the blade 24 or by another tool. As the work operation proceeds, the alignment of the web can be constantly monitored and adjusted, to insure that the web remains laterally aligned with the feed direction. This is accomplished in the same manner as described above with respect to initially aligning the web when it is first fed into the apparatus. That is, as the web is fed through the apparatus 10 by the feed mechanism 14, the optical sensors 90, 92 and 94, 96 read, respectively, the large and small hash marks printed on the opposite lateral edge portions of the web 12. If, as the web is being continuously fed through the apparatus, the controller 38 registers or counts ten smaller hash marks recorded by the sensors 94 and 96 in an equal time period, then the controller determines that the web 12 is laterally aligned with the feed direction. On the other hand, if the sensor 94 requires a longer or shorter period of time to record the passage of the ten smaller hash marks than the sensor 96 requires, then the controller determines that the web is being skewed either to the right or to the left with respect to the feed direction, as described above.

If either of the latter two conditions occur, the controller 38 forwards a command signal to the drive 53 to properly position the pinch wheel 43 transversely with respect to the width of the web along the contoured end portion 54 to adjust the web's lateral alignment. In this manner, the web is maintained in proper alignment with respect to the feed direction as the web is continuously fed through the apparatus and the work operation proceeds.

As noted above, longitudinal misalignment of the web 12 can also occur. That is, as the web 12 is printed or cut, a particular longitudinal position on the work area 82 of the web can become bowed forwardly or rearwardly with respect to corresponding positions on the lateral edge portions of the web. To compensate for this misalignment, the web is provided with a series of hash marks 98 printed either on the work surface (28) or on the opposite surface 34 of the carrier sheet 30 and aligned with the larger hash marks 86, 86. An optical sensor 100 records the passage of the hash marks 98, 98 and sends an output signal to the controller 38 where the event is registered. If the passage of a set of laterally aligned hash marks 86, 86 and 98 is registered simultaneously by the controller 38, then the controller determines that the web is longitudinally aligned. If, however, the passage of the hash mark 98 occurs either before or after the passage of the hash marks 86, 86, then the controller determines that the work area 82 is bowed with respect to the lateral edge portions 78 and 80 of the web.

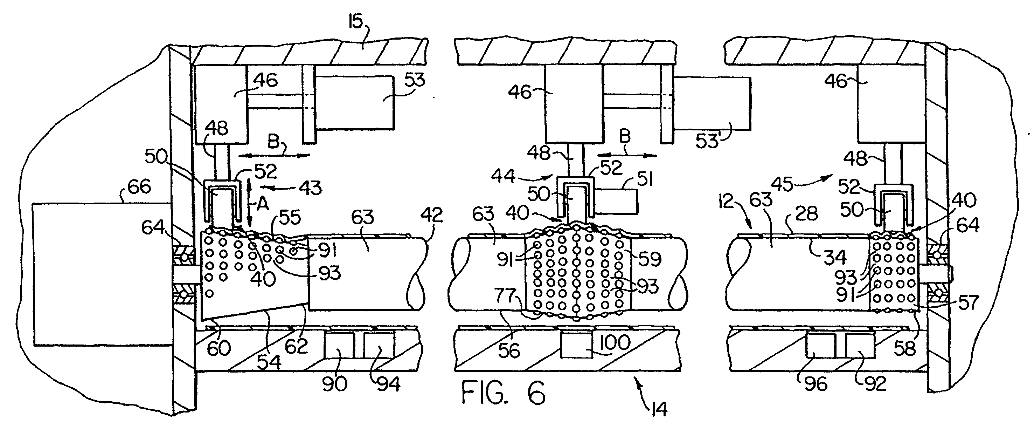

To correct for any longitudinal misalignment of the web 12 during a work operation, pinch wheel 44, as shown in both Figs. 2 and 6, is equipped with an appropriate drive 51, such as, for example, a motor, a belt drive, or a gear drive such that the friction roller 50 can be driven or braked. In operation, the controller causes the pinch wheel 44 to frictionally engage the work surface 28 of the web 12 and selectively engages the drive motor 51 to drive or brake the pinch wheel thereby maintaining the longitudinal alignment of the work area 82 with the lateral edge portions of the web. If the pinch wheel 44 is driven, the bowed portion of the web is urged in the feed direction such that any rearward bowing of the web 12 is compensated for. Conversely, if pinch wheel 44 is braked the motion of the web is retarded thereby compensating for any forward bowing of the web.

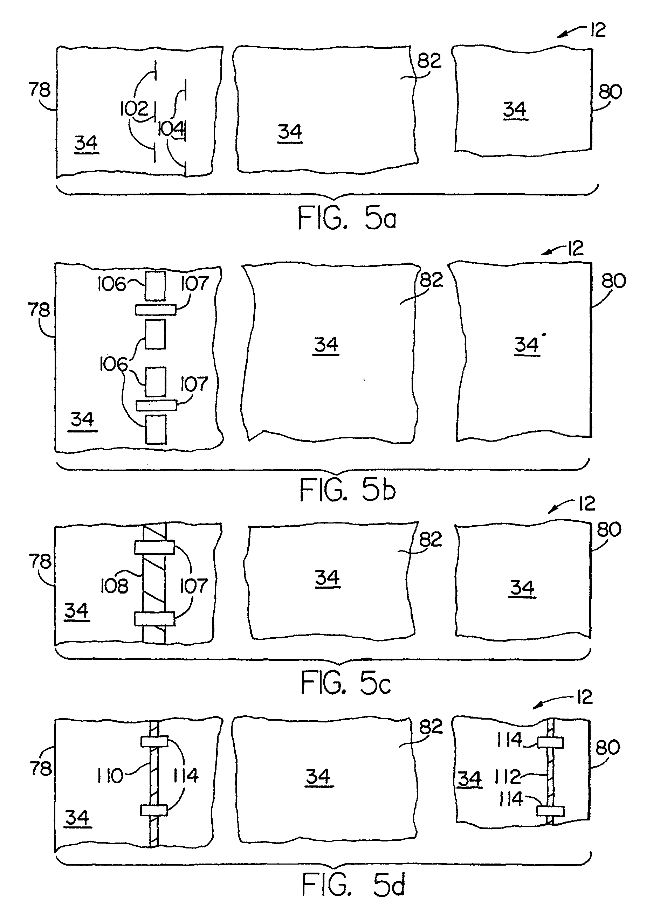

Referring again to the lateral alignment indicia 84, the present invention is not limited to the pattern of alignment indicia illustrated in Fig. 3. In this regard, Figs. 5a-5d illustrate examples of other types of indicia that would also serve to maintain the web in lateral alignment with the feed direction as the web is fed through the signmaking apparatus 12.

In Fig. 5a, the alignment indicia take the form of two parallel series of staggered hash marks 102, 104 printed along the length of the web within the lateral edge portion 78. If an optical sensor reads the passage of both series of hash marks, then the web is laterally aligned with the feed direction. If, however, the sensor records the passage of marks in only one of the series of staggered hash marks 102 or 104, then the controller determines that the web is skewed to the right or left, with respect to the feed direction.

In Fig. 5b, the alignment indicia take the form of a series of aligned band segments 106, 106 printed along the length of the web within the lateral edge portion 78 and oriented parallel to the feed direction. If a pair of longitudinally displaced optical sensors 107, 107 detect an angular deviation of the bands from a set angle of 0° corresponding to the parallel alignment of the band segments with the feed direction, then the controller determines that the web is misaligned and that correction is required. Fig. 5c illustrates a similar arrangement except that a continuous band instead of spaced band segments is employed.

In Fig. 5d, lines 110 and 112 oriented parallel with the feed direction are printed in lateral edge portions 78 and 80 respectively. A pair of longitudinally spaced sensors 114,114 is provided for each of the lines. If the sensors detect an angular deviation of the bands from a set angle of 0° corresponding to the parallel alignment of the band segments with the feed direction, then the controller similarly determines that the web is misaligned and that correction is required.

It should be appreciated that while in the preferred embodiment a conventional ink is used to print the alignment indicia and optical sensors used to record the passage of the indicia as the web is fed, other forms of indicia and sensing means can be utilized. For example, the indicia could be printed with a magnetic ink and magnetic sensors would be utilized to record the passage of the indicia.

Further, while the longitudinal alignment indicia 98, 98 are preprinted on the opposite surface 34 of the carrier sheet 30, the signmaking apparatus could be provided with a printing head upstream of the tool head to print these indicia as the web is being fed. If the indicia are printed on the work surface 28, then printing with a non-visible ink is preferred.

It is also possible to eliminate the pinch wheel 44 which is operable by the controller to correct bowing in the work area 82 of the web 12. The controller could simply detect the degree of bowing in the work area and control the relative movement of the web and the tool head 16 relative to one another as the graphic 36 is formed in a manner which compensates for any longitudinal misalignment of the web.

Additionally, instead of drive roller 42, as shown in figure 2, the drive mechanism could incorporate an elongated drive shaft 116 upon which are carried rollers 118, 120, and 122 as shown in Fig 8. When the drive shaft 116 and rollers 118,120, and 122 are mounted in the signmaking apparatus, pinch wheels 43, 44 and 45, shown in Fig. 6, would be mounted over rollers 118, 120, and 122 respectively. Roller 118 as shown is contoured similarly to end portion 54, shown in Fig. 2. However, the invention is not limited in this regard. Accordingly, it will be recognized by those skilled in the art that several other contour geometries are possible. Roller 120 as shown has a contoured geometry similar to the geometry of end portion 54' as shown in Fig 4a. As with roller 118, roller 120 is not limited in this regard. Accordingly, it will be recognized by those skilled in the art that several other contour geometries are possible. Roller 122 as shown in Fig. 6 is not contoured. However roller 122 is not limited in this regard and several other contour geometry's are possible. Rollers 118, 120 and 122 can be fabricated from, or covered with, a suitable high friction material, such as, for example, soft rubber. Additionally, or alternatively, rollers 118, 120 and 122 can be knurled to further increase the gripping forces between the web 12 and the rollers during operation.

In an alternate embodiment of the present invention, the web is brought back into alignment by a displacement mechanism used to displace an end of the roller relative to the roller's axis of rotation. This can be accomplished in several different ways which will be explained in detail below.

Referring to Fig. 9, the roller 42 is mounted at opposite ends in bearings 64, 64 that are supported by the frame 15. A suitable drive means 66, such as, for example, a motor, is drivingly associated with an end of the roller 42 for driving the roller about its longitudinal axis. A pair of directly opposed brackets 126, 126 extend from the frame 15 adjacent to the ends 128 and 130 of the roller 42. A piezoelectric drive 132 is attached to each bracket 126, 126 and engages a respective end 128, 130 of the roller 42.

During operation, if the web becomes skewed relative to the feed direction, the piezoelectric drive 132, in response to commands issued from the controller 38, engages and deflects the roller 42 thereby causing the web to re-align itself and track along the feed direction.

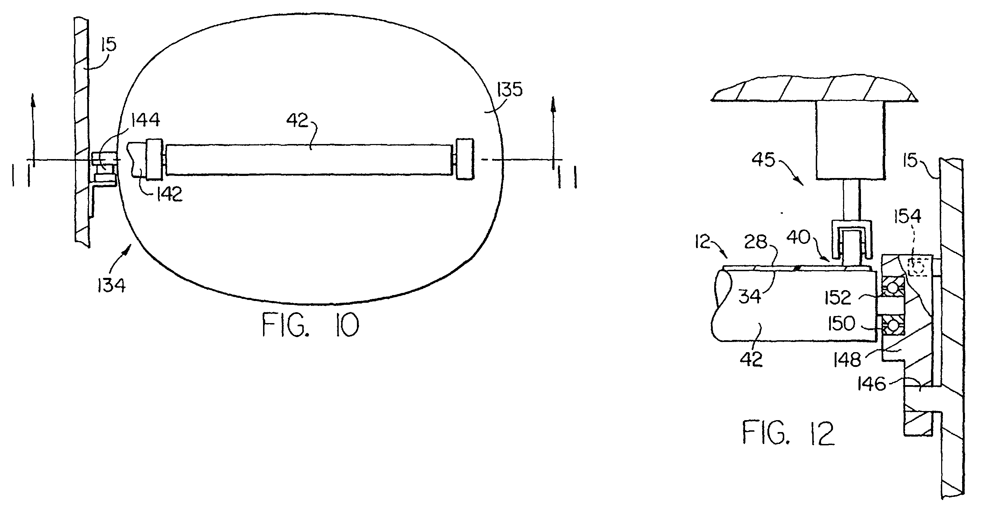

In another embodiment, illustrated in Figs. 10 and 11, a roller support 134 has an upper surface 135 and a lower surface 136. A shaft portion 138 extends from the lower surface 136 and defines an axis of rotation 139. A bearing 140 is mounted in the frame 15 in a recess for rotatably supporting the roller support 134. The roller 42 is rotatably supported on the top surface 135 of the roller support 134. A suitable drive means 142 is associated with an end of the roller for driving the roller in response to commands issued from the controller 38. A piezoelectric drive 144 is engaged with the roller support 134 for rotating the roller support about the axis of rotation 139 in response to commands issued from the controller 38. In operation, if the web becomes skewed as it is being fed over the roller 42, the piezoelectric drive 144, will be actuated, thereby rotating the roller support 134, and offsetting the roller 42 relative to the web, thus causing the web to be reoriented along the feed direction.

In still another embodiment shown in Fig. 12, a shaft member 146 extends from the frame 15. A bearing housing 148 having a bore 150 is pivotally mounted on the shaft member 146. A bearing 152 is supported in the bore 150 for rotatably receiving an end of the roller 42. A piezoelectric drive 154 is mounted to the frame 15 and is in communication with the bearing housing 148 for pivoting the bearing housing about the shaft member 146 in response to commands issued from the controller 38.

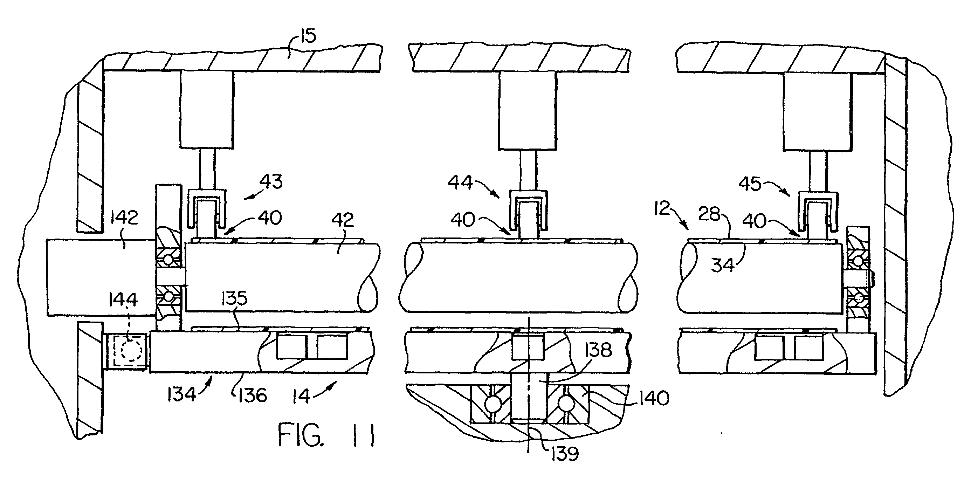

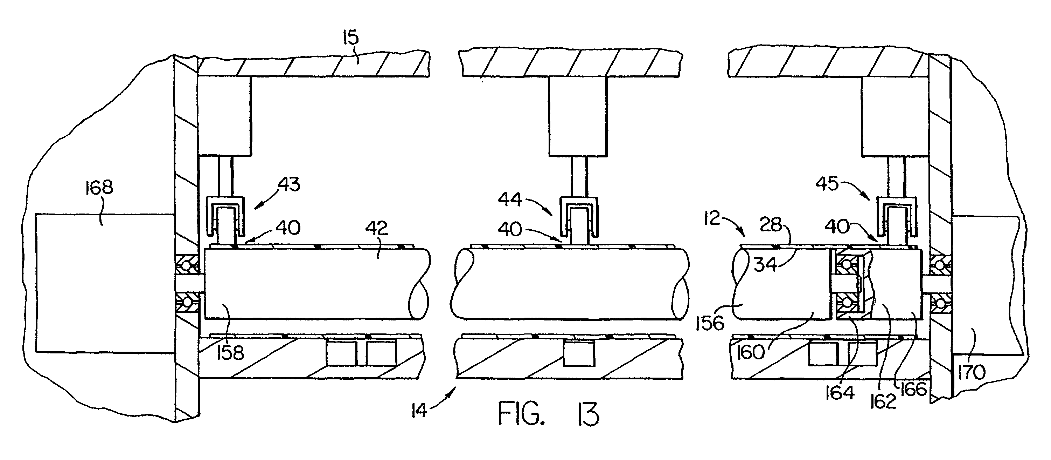

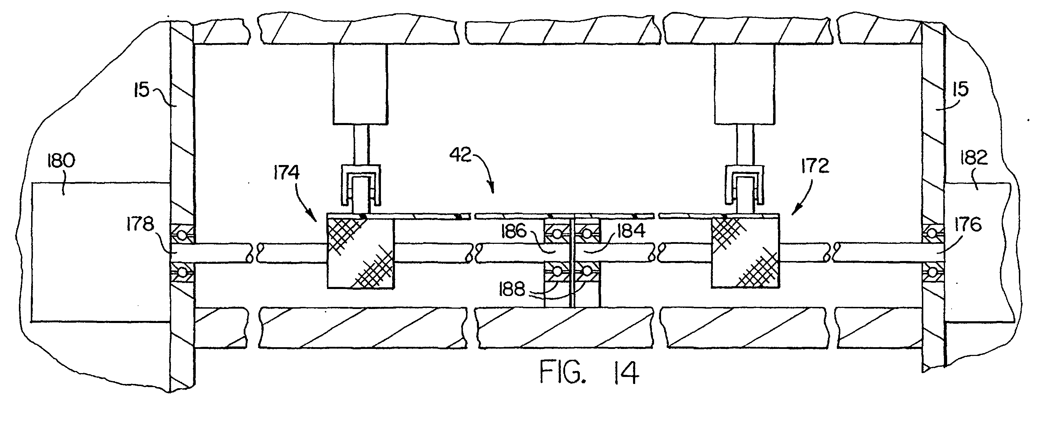

In yet a further embodiment, illustrated in Fig. 13, roller 42 consists of a first roller section 156 having first and second ends 158 and 160 respectively, and a second roller section 162, also having first and second ends 164 and 166 respectively. The first roller section 156 is rotatably mounted at its first end 158 to the frame 15. The second roller section 162 is rotatably mounted at its first end 164 to the second end 160 of the first roller section 156, with the second end 166 of the second roller section being rotatably mounted to the frame 15. A first drive means 168 is drivingly associated with the first end 158 of the first roller section 156 for driving the first roller section at a predetermined speed in accordance with commands issued from the controller 38. A second drive means 170 is drivingly associated with the second end 166 of the second roller section 162 for driving the second roller section at a rotational speed equal to, or different from the speed of the first roller section 156.

During operation, if the web becomes skewed relative to the feed direction as it passes over the roller 42, the second drive means 170 will cause the rate of rotation of the second roller section 162 to either increase or decrease, depending on the skewed orientation of the web, thereby driving the web back into alignment with the feed direction.

## Claims

1. A web (12) for use with a web feeding and handling apparatus (10) having a friction drive for feeding the web in a feed direction longitudinally of itself through the apparatus, a tool (24) for working on the web,
and means for reading alignment indicia on the web, including an elongated worksheet having a work surface, an opposite surface (34) and two parallel edge portions (78,80), the surfaces and the edge portions extending along the length of the worksheet, said worksheet having a work area (82) extending along the length thereof and located between the two parallel edge portions for working by the tool, said web being **characterized by**:
lateral alignment indicia (84) located on the opposite surface of the worksheet along the length thereof and positioned within at least one of the parallel edge portions, the indicia readable by the reading means (90,92) to determine the lateral alignment of the web with respect to the feed direction as the web is fed into and through the web handling apparatus;
and longitudinal alignment indicia (86, 98) located either on the work surface (28) or on the opposite surface (34) of the worksheet along the length thereof and positioned within the work area, the longitudinal alignment indicia being readable by the reading means (90,92) to determine the longitudinal alignment of corresponding positions along the work area and the lateral edge portions of the web with respect to the feed direction as the web is fed through the web handling apparatus.

2. The web (12) of claim 1 wherein the lateral alignment indicia (84) are formed by two parallel series of staggered hash marks (102,104) oriented parallel to the feed direction.

3. The web of claim 2 wherein the series of the staggered hash marks (102,104) are positioned within each of the parallel edge portions (78,80), the hash marks of one of the series being longitudinally aligned with corresponding ones of the other series.

4. The web (12) of claim 1 including wherein the lateral alignment indicia (84) include a pair of solid lines oriented parallel to the feed direction, each one of the lines positioned in a corresponding one of the lateral edge portions (78,80).

5. The web (12) of claim 1 wherein the lateral alignment indicia (84) include a series of aligned band segments (106), each of the segments oriented parallel to the feed direction.

6. A laminated web (12) for use with a web feeding and working apparatus (10) having a friction drive for feeding the web in a feed direction longitudinally of itself through the apparatus, a tool (24) for working on the web, and means for reading (90,92) alignment indicia (84) carried by the web, said laminated web including an elongated carrier sheet (30) having a support surface (32) and an opposite surface (34), an elongated worksheet (26) supported on the carrier sheet (30) and having a work surface (28), the laminated web having two parallel edge portions (78,80), the surfaces extending along the length thereof and having a work area (82) located between the two parallel edge portions for working by the tool; said laminated web **characterized by**:
lateral alignment indicia (84) located on the opposite surface of the carrier sheet along the length thereof and positioned within at least one of the parallel edge portions, the lateral alignment indicia readable by the reading means (90,92) to determine the lateral alignment of the web with respect to the feed direction as the web is fed into and through the web handling apparatus;
and longitudinal alignment indicia (86, 98) located on either the work surface (28) or the opposite surface (34) along the length of the web (12) and positioned within the work area (82) to determine the longitudinal alignment of corresponding positions along the work area (82) and the lateral edge portions of the web (12) with respect to the feed direction as the web (12) is fed through the web handling apparatus.

7. A web feeding and handling apparatus (10) for moving the web of claim 1 (12) back and forth along a feed path extending longitudinally of the web and for performing a work operation on the web, the apparatus including: a friction drive for frictionally engaging and moving the web along the feed path, a tool (24) engageable with the web and moveable relative thereto for working on the web,
a controller (38) for activating the friction drive and the tool to move the web and the tool relative to one another to perform a work operation on the web, said apparatus being **characterized by**:
located longitudinally along at least one of two parallel edge portions (78,80) of the web for determining the lateral alignment of the web with respect to the feed direction,
means (90,92) for reading lateral alignment indicia on the web and generating output signals indicative of the lateral alignment of the web with respect to the feed direction;
wherein the controller controls the operation of the friction drive in response to the output signals to align the web with the feed direction as the web is fed into the apparatus and maintain the lateral alignment of the web with respect to the feed direction as the web is fed through the apparatus and the work operation proceeds.

8. The apparatus (10) of claim 7, where the friction drive comprises a contoured roller (42) and a plurality of pinch wheels (43,45) spaced along the width of the web (12), the roller and pinch wheels cooperating to define a nip (40) for receiving the web and feeding the web in the feed direction, the position of at least one of the pinch wheels being moveable along the width of the web to adjust the lateral alignment of the web with respect to the feed direction.

9. The apparatus of claim 8 wherein the contoured roller (42) includes opposing end portions (54) and a central portion (74) interposed between the opposing end portions, said contoured roller being further **characterized by**:
the opposed ends and a section of the central portion having friction surfaces (55) for gripping the web;
at least one of the portions being contoured; and
at least one of the plurality of pinch wheels being positioned above each of the respective friction surfaces.

10. The apparatus of claim 8 wherein the roller (42) is **characterized by** an elongated shaft (116) with a plurality of spaced apart rollers (118,120,122) carried by the shaft;
at least one of the plurality of pinch wheels (43,44,45) being positioned over each of the plurality of spaced apart rollers; and
at least one of the plurality of spaced apart rollers being contoured.

11. The apparatus of claim 9 further **characterized by**:
a pair of sleeves (65) fabricated from a low friction material carried by the roller, one of the sleeves being interposed between one of the opposed end friction surfaces (55,57,59) and the central portion friction surface, and the other of the sleeves being interposed between the central portion friction surface and the other of the opposed end friction surfaces.

12. The apparatus of anyone of claims 7 to 11 wherein at least one of the plurality of pinch wheels (43) is driven such that when the web is fed through the nip, the driven pinch wheel can either advance or brake the portion of the web with which it is engaged such that during operation, the alignment of the web is maintained.

13. The web feeding and handling apparatus (10) of claim 7, including a roller mounted for rotation about a roller axis extending perpendicular to the feed path,
a displacement mechanism (132) engageable with the roller (42) for displacing at least a portion of the roller away from the longitudinal roller axis;
a plurality of pinch wheels (43,44,45) spaced along the roller for moving between a working position, and a non-working position;
said pinch wheels in the working position cooperating with the roller to define a nip (40) for receiving the web; and
drive means for rotationally driving the roller according to signals issued from the controller.

14. A web feeding and handling device as defined by claim 13, wherein the roller displacement mechanism is further **characterized by**:
a roller support (134) rotatably mounted to the frame;
the roller (42) being rotatably mounted on the roller support;
at least one- actuator mounted to the frame and in communication with the roller support for selectively rotating the roller support in response to commands issued from the controller (38), thereby changing the orientation of the roller with respect to the frame.

15. A web feeding and handling device (10) as defined by claim 13 or 14, wherein said roller (42) is further **characterized by**:
a first roller section (156) having a first and second end (158,160);
a second roller section (162) having a first and second end (164,166);
the first roller section being rotatably mounted at its first end to the frame (15);
the second roller section being rotatably mounted at its first end to the second end of the first roller section;
the second end of the second roller section being rotatably mounted to the frame, and wherein said drive means comprises;
a first drive means (168) drivingly associated with the first end of the first roller section for driving the first roller section at a predetermined speed; and
a second drive means (170) drivingly associated with the second end of the second roller section for driving the second roller section at a speed equal to, or different from the speed of the first roller section.

## Patentansprüche

1. Materialbahn (12) zur Verwendung in einer Vorrichtung (10) zum Transportieren und Bearbeiten einer Materialbahn, wobei die Vorrichtung einen Reibantrieb zum Transportieren der Materialbahn in eine Transportrichtung längs zu sich selbst durch die Vorrichtung und ein Werkzeug (24) zum Bearbeiten der Materialbahn hat,
sowie Mittel zum Lesen von Ausrichtungsmarkierungen auf der Materialbahn, wobei die Materialbahn ein längliches Arbeitsblatt mit einer Arbeitsfläche, einer abgewandten Fläche (34) und zwei parallelen Randabschnitten (78, 80) hat, wobei die Flächen und die Randabschnitte entlang der Länge des Arbeitsblatts verlaufen, das einen Arbeitsbereich (82) hat, der in dessen Längsrichtung verläuft und zwischen den beiden parallelen Randabschnitten angeordnet ist, um von dem Werkzeug bearbeitet zu werden, wobei die Materialbahn **gekennzeichnet ist durch**
Querausrichtungsmarkierungen (84), die auf der abgewandten Fläche des Arbeitsblatts entlang seiner Länge angeordnet und innerhalb mindestens eines der parallelen Randabschnitte positioniert sind, wobei die Markierungen von den Lesemitteln (90, 92) gelesen werden können, um die Querausrichtung der Materialbahn bezüglich der Transportrichtung zu bestimmen, wenn die Materialbahn in und **durch** die Vorrichtung zum Bearbeiten einer Materialbahn geführt wird,
und Längsausrichtungsmarkierungen (86, 98), die entweder auf der Arbeitsfläche (28) oder auf der abgewandten Fläche (34) des Arbeitsblatts entlang dessen Länge angeordnet und innerhalb des Arbeitsbereichs positioniert sind, wobei die Längsausrichtungsmarkierungen von den Lesemitteln (90, 92) gelesen werden können, um die Längsausrichtung entsprechender Positionen entlang dem Arbeitsbereich und den seitlichen Randabschnitten der Materialbahn bezüglich der Transportrichtung zu bestimmen, wenn die Materialbahn **durch** die Vorrichtung zum Bearbeiten einer Materialbahn geführt wird.

2. Materialbahn (12) nach Anspruch 1, wobei die Querausrichtungsmarkierungen (84) aus zwei parallelen Reihen versetzter Kontrollmarken (102, 104) gebildet sind, die parallel zur Transportrichtung ausgerichtet sind.

3. Materialbahn nach Anspruch 2, wobei die Reihen versetzter Kontrollmarken (102, 104) innerhalb jedes der parallelen Randabschnitte (78, 80) angeordnet sind, wobei die Kontrollmarken einer der Reihen in Längsrichtung fluchtend mit entsprechenden Kontrollmarken der anderen Reihe angeordnet sind.

4. Materialbahn (12) nach Anspruch 1, wobei die Querausrichtungsmarkierungen (84) zwei durchgezogene Linien enthalten, die parallel zur Transportrichtung ausgerichtet sind, wobei jede der Linien in einem entsprechenden seitlichen Randabschnitt (78, 80) angeordnet ist.

5. Materialbahn (12) nach Anspruch 1, wobei die Querausrichtungsmarkierungen (84) eine Reihe fluchtender Streifensegmente (106) enthalten, wobei jedes der Segmente parallel zur Transportrichtung ausgerichtet ist.

6. Laminierte Materialbahn (12) zur Verwendung mit einer Vorrichtung (10) zum Transportieren und Bearbeiten einer Materialbahn, wobei die Vorrichtung einen Reibantrieb zum Transportieren der Materialbahn in einer Transportrichtung längs zu sich selbst durch die Vorrichtung, ein Werkzeug (24) zum Bearbeiten der Materialbahn sowie Mittel (90, 92) zum Lesen von Ausrichtungsmarkierungen (84) hat, die von der Materialbahn getragen werden, wobei die laminierte Materialbahn ein längliches Trägerblatt (30) mit einer Trägerfläche (32) und einer abgewandten Fläche (34) und ein längliches Arbeitsblatt (26), das auf dem Trägerblatt (30) gehalten wird und eine Arbeitsfläche (28) hat, umfaßt, wobei die laminierte Materialbahn zwei parallele Randabschnitte (78, 80) hat, sich die Flächen entlang deren Länge erstrecken und einen Arbeitsbereich (82) haben, der zur Bearbeitung durch das Werkzeug zwischen den beiden parallelen Randabschnitten angeordnet ist, und die laminierte Materialbahn **gekennzeichnet ist durch**:
Querausrichtungsmarkierungen (84), die auf der abgewandten Fläche des Trägerblatts entlang seiner Länge angeordnet und innerhalb mindestens eines der parallelen Randabschnitte positioniert sind, wobei die Querausrichtungsmarkierungen von den Lesemitteln (90, 92) gelesen werden können, um die Querausrichtung der Materialbahn bezüglich der Transportrichtung zu bestimmen, wenn die Materialbahn in und **durch** die Vorrichtung zum Bearbeiten einer Materialbahn geführt wird,
und Längsausrichtungsmarkierungen (86, 98), die entweder auf der Arbeitsfläche (28) oder der abgewandten Fläche (34) entlang der Länge der Materialbahn (12) angeordnet und innerhalb des Arbeitsbereichs (82) positioniert sind, um die Längsausrichtung entsprechender Positionen entlang dem Arbeitsbereich (82) und den seitlichen Randabschnitten der Materialbahn (12) bezüglich der Transportrichtung zu bestimmen, wenn die Materialbahn (12) **durch** die Vorrichtung zum Bearbeiten einer Materialbahn geführt wird.

7. Vorrichtung (10) zum Transportieren und Bearbeiten einer Materialbahn zwecks Bewegen der Materialbahn (12) nach Anspruch 1 vorwärts und rückwärts entlang einem in Längsrichtung der Materialbahn verlaufenden Transportweg und zwecks Ausführen eines Arbeitsschrittes auf der Materialbahn, wobei die Vorrichtung enthält: einen Reibantrieb zum reibenden Angreifen und Bewegen der Materialbahn entlang dem Transportweg, ein Werkzeug (24), das mit der Materialbahn in Kontakt gebracht werden kann und relativ dazu bewegbar ist, um die Materialbahn zu bearbeiten,
eine Steuerung (38) zum Aktivieren des Reibantriebs und des Werkzeugs, um die Materialbahn und das Werkzeug relativ zueinander zu bewegen, um einen Arbeitsschritt auf der Materialbahn auszuführen, wobei die Vorrichtung **gekennzeichnet ist durch**:
ihre Anordnung in Längsrichtung entlang mindestens einem der beiden parallelen Randabschnitte (78, 80) der Materialbahn, um die Querausrichtung der Materialbahn bezüglich der Transportrichtung zu bestimmen,
Mittel (90, 92) zum Lesen von Querausrichtungsmarkierungen auf der Materialbahn und zum Erzeugen von Ausgangssignalen, die die Querausrichtung der Materialbahn bezüglich der Transportrichtung angeben,
wobei die Steuerung den Betrieb des Reibantriebs in Abhängigkeit der Ausgangssignale steuert, um die Materialbahn an der Transportrichtung auszurichten, während die Materialbahn in die Vorrichtung transportiert wird, und die Querausrichtung der Materialbahn bezüglich der Transportrichtung beizubehalten, während die Materialbahn **durch** die Vorrichtung transportiert wird und der Arbeitsschritt andauert.

8. Vorrichtung (10) nach Anspruch 7, wobei der Reibantrieb eine profilierte Walze (42) und mehrere über die Breite der Materialbahn (12) verteilte Andruckräder (43, 45) hat, wobei die Walze und die Andruckräder zusammenwirken, um einen Spalt (40) zum Aufnehmen der Materialbahn und Transportieren der Materialbahn in Transportrichtung zu bilden, wobei die Position mindestens eines der Andruckräder entlang der Breite der Materialbahn verschiebbar ist, um die Querausrichtung der Materialbahn bezüglich der Transportrichtung einzustellen.

9. Vorrichtung nach Anspruch 8, wobei die profilierte Walze (42) einander entgegengesetzte Endabschnitte (54) und einen mittleren Abschnitt (74) hat, der zwischen den entgegengesetzten Endabschnitten liegt, wobei die profilierte Walze ferner **dadurch gekennzeichnet ist, daß**
die entgegengesetzten Enden und ein Bereich des mittleren Abschnitts Reibflächen (55) zum Greifen der Materialbahn haben,
mindestens einer der Abschnitte profiliert ist, und
mindestens eines der mehreren Andruckräder über der entsprechenden Reibfläche positioniert ist.

10. Vorrichtung nach Anspruch 8, wobei die Walze (42) durch eine längliche Welle (116) **gekennzeichnet** ist, von der mehrere voneinander beabstandete Walzen (118, 120, 122) getragen werden,
wobei mindestens eines der mehreren Andruckräder (43, 44, 45) über der entsprechenden der mehreren voneinander beabstandeten Walzen positioniert ist, und
mindestens eine der mehreren voneinander beabstandeten Walzen profiliert ist.

11. Vorrichtung nach Anspruch 9, ferner **gekennzeichnet durch**:
ein Paar Muffen (65) aus einem reibungsarmen Material, die von der Walze getragen werden, wobei eine der Muffen zwischen einer der Reibflächen (55, 57, 59) an den entgegengesetzten Enden und der Reibfläche am mittleren Abschnitt liegt, und die andere der Muffen (65) zwischen der Reibfläche am mittleren Abschnitt und der anderen der Reibflächen an den entgegengesetzten Enden liegt.

12. Vorrichtung nach einem der Ansprüche 7 bis 11, wobei mindestens eines der mehreren Andruckräder (43) so angetrieben wird, daß beim Transport der Materialbahn durch den Spalt das angetriebene Andruckrad den an ihm anliegenden Abschnitt der Materialbahn entweder so vorschieben oder abbremsen kann, daß die Ausrichtung der Materialbahn beim Betrieb beibehalten wird.

13. Vorrichtung (10) zum Transportieren und Bearbeiten einer Materialbahn nach Anspruch 7, wobei die Vorrichtung versehen ist mit einer Walze, die drehbar um eine Walzenachse gelagert ist, die senkrecht zum Transportweg verläuft,
einem Verschiebemechanismus (132), der mit der Walze (42) in Kontakt gebracht werden kann, um mindestens einen Abschnitt der Walze von der Walzenlängsachse weg zu verschieben,
mehreren Andruckrädern (43, 44, 45), die entlang der Walze beabstandet sind, zum Bewegen zwischen einer Arbeitsstellung und einer Nicht-Arbeitsstellung,
wobei die Andruckräder in der Arbeitsstellung mit der Walze zusammenwirken, um einen Spalt (40) zur Aufnahme der Materialbahn auszubilden, und
Antriebsmitteln zum drehbaren Antreiben der Walze entsprechend den von der Steuerung ausgegebenen Signalen.

14. Vorrichtung zum Transportieren und Bearbeiten einer Materialbahn nach Anspruch 13, wobei der Walzenverschiebemechanismus ferner **gekennzeichnet ist durch**:
einen drehbar am Rahmen gelagerten Walzenträger (134),
wobei die Walze (42) drehbar auf dem Walzenträger gelagert ist,
mindestens ein am Rahmen befestigtes Betätigungselement, das mit dem Walzenträger in Verbindung steht, um den Walzenträger in Abhängigkeit von von der Steuerung (38) ausgegebenen Befehlen wahlweise zu drehen und **dadurch** die Ausrichtung der Walze bezüglich des Rahmens zu ändern.

15. Vorrichtung (10) zum Transportieren und Bearbeiten einer Materialbahn, nach Anspruch 13 oder 14, wobei die Walze (42) ferner **gekennzeichnet ist durch**:
einen ersten Walzenabschnitt (156) mit einem ersten und einem zweiten Ende (158, 160),
einen zweiten Walzenabschnitt (162) mit einem ersten und einem zweiten Ende (164, 166),
wobei der erste Walzenabschnitt an seinem ersten Ende drehbar am Rahmen (15) gelagert ist,
wobei der zweite Walzenabschnitt an seinem ersten Ende drehbar am zweiten Ende des ersten Walzenabschnitts gelagert ist,
wobei das zweite Ende des zweiten Walzenabschnittes drehbar am Rahmen gelagert ist, und wobei die Antriebsmittel enthalten:
ein erstes Antriebsmittel (168), das antreibend mit dem ersten Ende des ersten Walzenabschnittes verbunden ist, um den ersten Walzenabschnitt mit einer vorbestimmten Geschwindigkeit anzutreiben, und
ein zweites Antriebsmittel (170), das antreibend mit dem zweiten Ende des zweiten Walzenabschnittes verbunden ist, um den zweiten Walzenabschnitt mit einer Geschwindigkeit anzutreiben, die gleich oder verschieden von der Geschwindigkeit des ersten Walzenabschnittes ist.

## Revendications

1. Bande (12) destinée à être utilisée avec un dispositif d'avance et de manipulation de bande (10) comportant un entraînement par friction destiné à faire avancer la bande dans une direction d'avance, longitudinalement par rapport à celle-ci, au travers du dispositif, un outil (24) destiné à travailler sur la bande,
et un moyen destiné à lire des marques d'alignement sur la bande, comprenant une feuille de travail allongée comportant une surface de travail, une surface opposée (34) et deux parties de bord parallèles (78, 80), les surfaces et les parties de bord s'étendant suivant la longueur de la feuille de travail, ladite feuille de travail comportant une zone de travail (82) s'étendant suivant la longueur de celle-ci et située entre les deux parties de bord parallèles en vue d'un travail effectué par l'outil, ladite bande étant **caractérisée par** :
des marques d'alignement latérales (84) situées sur la surface opposée de la feuille de travail suivant la longueur de celle-ci, et positionnées à l'intérieur d'au moins l'une des parties de bord parallèles, lesdites marques pouvant être lues par le moyen de lecture (90, 92) afin de déterminer l'alignement latéral de la bande par rapport à la direction d'avance lorsque la bande est avancée jusque dans le dispositif de manipulation de bande et au travers de celui-ci,
et des marques d'alignement longitudinales (86, 98) situées soit sur la surface de travail (28), soit sur la surface opposée (34) de la feuille de travail, suivant la longueur de celle-ci, et positionnées à l'intérieur de la zone de travail, lesdites marques d'alignement longitudinales étant lisibles par le moyen de lecture (90, 92) pour déterminer l'alignement longitudinal des positions correspondantes le long de la zone de travail, et des parties de bord latérales de la bande par rapport à la direction d'avance lorsque la bande est avancée au travers du dispositif de manipulation de bande.

2. Bande (12) selon la revendication 1, dans laquelle les marques d'alignement latérales (84) sont formées de deux séries parallèles de repères intermittents échelonnés (102, 104) orientés parallèlement à la direction d'avance.

3. Bande (12) selon la revendication 2, dans laquelle les séries de repères intermittents échelonnés (102, 104) sont positionnées à l'intérieur de chacune des parties de bord parallèles (78, 80), les repères intermittents de l'une des séries étant alignés longitudinalement avec les repères correspondants de l'autre série.

4. Bande (12) selon la revendication 1, dans laquelle les marques d'alignement latérales (84) comprennent une paire de lignes continues orientées parallèlement à la direction d'avance, chacune des lignes étant positionnée dans une partie correspondante des parties de bord latérales (78, 80).

5. Bande (12) selon la revendication 1, dans laquelle les marques d'alignement latérales (84) comprennent une série de segments de bande alignés (106), chacun des segments étant orienté parallèlement à la direction d'avance.

6. Bande stratifiée (12) destinée à être utilisée avec un dispositif d'avance et de travail sur une bande (10) comportant un entraînement par friction destiné à faire avancer la bande dans une direction d'avance, longitudinalement par rapport à celle-ci, au travers du dispositif, un outil (24) destiné à travailler sur la bande, et un moyen destiné à lire (90, 92) des marques d'alignement (84) portées par la bande, ladite bande stratifiée comprenant une feuille de transport allongée (30) comportant une surface de support (32) et une surface opposée (34), une feuille de travail allongée (26) supportée sur la feuille de transport (30) et comportant une surface de travail (28), ladite bande stratifiée comportant deux parties de bord parallèles (78, 80), lesdites surfaces s'étendant suivant la longueur de celles-ci et comportant une zone de travail (82) située entre les deux parties de bord parallèles en vue d'un travail effectué par l'outil, ladite bande stratifiée étant **caractérisée par** :
des marques d'alignement latérales (84) situées sur la surface opposée de la feuille de transport suivant la longueur de celle-ci, et positionnées à l'intérieur d'au moins l'une des parties de bord parallèles, lesdites marques d'alignement latérales étant lisibles par le moyen de lecture (90, 92) pour déterminer l'alignement latéral de la bande par rapport à la direction d'avance lorsque la bande est avancée jusqu'au dispositif de manipulation de bande et au travers de celui-ci,
et des marques d'alignement longitudinales (86, 98) disposées soit sur la surface de travail (28), soit sur la surface opposée (34), suivant la longueur de la bande (12), et positionnées à l'intérieur de la zone de travail (82) afin de déterminer l'alignement longitudinal des positions correspondantes le long de la surface de travail (82), et des parties de bord latérales de la bande (12) par rapport à la direction d'avance lorsque la bande (12) est avancée au travers du dispositif de manipulation de bande.

7. Dispositif d'avance et de manipulation de bande (10) destiné à déplacer la bande (12) selon la revendication 1, en va-et-vient le long d'un trajet d'avance s'étendant longitudinalement par rapport à la bande, et destiné à exécuter une opération de travail sur la bande, ledit dispositif comprenant : un entraînement par friction destiné à entrer en contact par friction, et à déplacer la bande le long du trajet d'avance, un outil (24) pouvant entrer en contact avec la bande et pouvant être déplacé par rapport à celle-ci en vue de travailler sur la bande,
un contrôleur (38) destiné à activer l'entraînement par friction et l'outil pour déplacer la bande et l'outil l'un par rapport à l'autre en vue d'exécuter une opération de travail sur la bande, ledit dispositif étant **caractérisé par** :
situé longitudinalement le long d'au moins l'une des deux parties de bord parallèles (78, 80) de la bande pour déterminer un alignement latéral de la bande par rapport à la direction d'avance,
un moyen (90, 92) destiné à lire les marques d'alignement latérales sur la bande, et à générer des signaux de sortie indicatifs de l'alignement latéral de la bande par rapport à la direction d'avance,
dans lequel le contrôleur commande le fonctionnement de l'entraînement par friction en réponse aux signaux de sortie afin d'aligner la bande avec la direction d'avance lorsque la bande est avancée dans le dispositif, et de conserver l'alignement latéral de la bande par rapport à la direction d'avance lorsque la bande est avancée au travers du dispositif et que l'opération de travail se déroule.

8. Dispositif (10) selon la revendication 7, dans lequel l'entraînement par friction comprend un rouleau profilé (42) et une pluralité de roues de pincement (43, 45) espacées sur la largeur de la bande (12), le rouleau et les roues de pincement coopérant pour définir un pincement (40) destiné à recevoir la bande et à avancer la bande dans la direction d'avance, la position d'au moins l'une des roues de pincement étant mobile sur la largeur de la bande afin d'ajuster l'alignement latéral de la bande par rapport à la direction d'avance.

9. Dispositif selon la revendication 8, dans lequel le rouleau profilé (42) comprend des parties d'extrémité opposées (54) et une partie centrale (74) intercalée entre les parties d'extrémité opposées, ledit rouleau profilé étant en outre **caractérisé en ce que** :
les extrémités opposées et une section de la partie centrale comportent des surfaces de friction (55) destinées à saisir la bande,
au moins l'une des parties étant profilée, et
au moins une roue de la pluralité de roues de pincement étant positionnée au-dessus de chacune des surfaces de friction respectives.

10. Dispositif selon la revendication 8, dans lequel le rouleau (42) est **caractérisé par** un arbre allongé (116) avec une pluralité de rouleaux espacés (118, 120, 122) portés par l'arbre,
au moins une roue de la pluralité de roues de pincement (43, 44, 45) étant positionnée sur chaque rouleau de la pluralité de rouleaux espacés, et
au moins un rouleau de là pluralité de rouleaux espacés étant profilé.

11. Dispositif selon la revendication 9, **caractérisé en outre par** :
une paire de manchons (65) fabriqués à partir d'un matériau à bas coefficient de frottement porté par le rouleau, l'un des manchons étant intercalé entre l'une des surfaces de friction des extrémités opposées (55, 57, 59) et la surface de friction de la partie centrale, et l'autre des manchons étant intercalé entre la surface de friction de la partie centrale et l'autre des surfaces de friction des extrémités opposées.

12. Dispositif selon l'une quelconque des revendications 7 à 11, dans lequel au moins une roue de la pluralité de roues de pincement (43) est entraînée de telle sorte que, lorsque la bande est avancée au travers du pincement, la roue de pincement entraînée peut soit faire avancer, soit freiner la partie de -la bande qui est en prise, de sorte que durant l'opération, l'alignement de la bande soit conservé.

13. Dispositif d'avance et de manipulation de bande (10) selon la revendication 7, comprenant un rouleau monté en vue d'une rotation autour d'un axe de rouleau s'étendant perpendiculairement au trajet d'avance, un mécanisme de déplacement (132) pouvant entrer en contact avec le rouleau (42) en vue de déplacer au moins une partie du rouleau à l'écart de l'axe longitudinal du rouleau,
une pluralité de roues de pincement (43, 44, 45) espacées le long du rouleau pour un déplacement entre une position de travail et une position hors travail,
lesdites roues de pincement coopérant dans la position de travail avec le rouleau pour définir un pincement (40) destiné à recevoir la bande, et un moyen d'entraînement destiné à entraîner en rotation le rouleau conformément aux signaux émis à partir du contrôleur.

14. Dispositif d'avance et de manipulation de bande selon la revendication 13, dans lequel le mécanisme de déplacement à rouleau est en outre **caractérisé par** :
un support de rouleau (134) monté sur le châssis avec possibilité de rotation,
le rouleau (42) étant monté sur le support de rouleau avec possibilité de rotation,
au moins un actionneur monté sur le châssis, et en communication avec le support de rouleau, afin de faire tourner sélectivement le support de rouleau en réponse aux ordres de commande émis depuis le contrôleur (38), afin de modifier ainsi l'orientation du rouleau par rapport au châssis.

15. Dispositif d'avance et de -manipulation de bande (10) selon la revendication 13 ou 14, dans lequel ledit rouleau (42) est en outre **caractérisé par** :
une première section de rouleau (156) comportant une première et une seconde extrémités (158, 160), une seconde section de rouleau (162) comportant une première et une seconde extrémités (164, 166),
la première section de rouleau étant montée avec possibilité de rotation à sa première extrémité sur le châssis (15),
la seconde section de rouleau étant montée avec possibilité de rotation à sa première extrémité sur la seconde extrémité de la première section de rouleau,
la seconde extrémité de la seconde section de rouleau étant montée avec possibilité de rotation sur le châssis, et dans lequel ledit moyen d'entraînement comprend :
un premier moyen d'entraînement (168) associé avec possibilité d'entraînement à la première extrémité de la première section de rouleau afin d'entraîner la première section de rouleau à une vitesse prédéterminée, et
un second moyen d'entraînement (170) associé avec possibilité d'entraînement à la seconde extrémité de la seconde section de rouleau afin d'entraîner la seconde section de rouleau à une vitesse égale à ou différente de la vitesse de la première section de rouleau.
